# EUROPÄISCHE PATENTSCHRIFT

(11) **EP 1 609 578 B1**
(45) Veröffentlichungstag und Bekanntmachung des Hinweises auf die Patenterteilung: **30.07.2008**
(21) Anmeldenummer: 05103843.8
(22) Anmeldetag: 10.05.2005
(51) Int. Cl.: B29C 44/38

(54) **Mischkopfsystem**
Mixing head
Tête de mélange

(30) Priorität: 26.06.2004 DE 102004031026
(43) Veröffentlichungstag der Anmeldung: 28.12.2005
(73) Patentinhaber: KraussMaffei Technologies GmbH, 80997 München (DE)
(72) Erfinder: Moser, Ralf, 80933 München (DE)
(74) Vertreter: Zollner, Richard

(56) Entgegenhaltungen:
- AU-A- 6 397 865
- DE-A1- 19 736 534
- US-A- 4 073 841
- US-A- 4 522 578
- US-B1- 6 199 593

## Beschreibung

Die Erfindung betrifft ein Mischkopfsystem für die diskontinuierliche Herstellung eines Mehrschichtrohres gemäß dem Oberbegriff des Anspruchs 1.

Es ist bekannt, beispielsweise ein wärmegedämmtes Rohr durch Befüllen eines Zwischenraumes zwischen einem Innenrohr und einem Außenrohr herzustellen. Als Füllmaterial kann ein geschäumter Kunststoff, insbesondere ein Duroplast, verwendet werden. Als Duroplast eignet sich beispielsweise Polyurethan, bei welchem Polyol und Isocyanat in der Mischkammer eines Mischkopfes vermischt und dann in den Zwischenraum zwischen dem Innen- und dem Außenrohr ausgebracht werden. Dabei ist es bekannt, den reaktiven Schaum an einer Seite eines schräg nach unten geneigten Rohres einzufüllen und nach unten laufen zu lassen. Andererseits ist es auch bekannt, beim Einbringen den Mischkopf im Rohrzwischenraum zurückzuziehen, wobei kontinuierlich Füllmaterial nachgefördert wird. Eine Vorrichtung zur Durchführung eines solchen Verfahrens ist aus der US-A-4,073,841 bekannt, wobei bei dieser Vorrichtung lediglich ein Mischkopf mit einer Mischkammer in den Zwischenraum eingeführt wird. Der letztgenannte Mischkopf umfasst jedoch weder Rückführleitungen oder Steuerkolben.

In der DE-A-197 36 534 ist eine Vorrichtung zum Ausschäumen von Hohlräumen gemäß der Oberbegriff des Anspruchs 1 beschrieben, bei der zwei Rohstoffkomponenten in einer gemeinsamen Mischkammer zusammengebracht und das reaktive Gemisch dann über ein Schaumauslaufrohr ausgetragen werden. Das Ende des Schaumaustragsrohres wird dazu an eine Eintrittsöffnung des zu füllenden Zwischenraums herangeführt.

In der WO-A-00/747387 ist ein Verfahren und eine Vorrichtung zur diskontinuierlichen Herstellung eines wärmedämmenden Rohres beschrieben. Dabei wird ein Polyurethan-Hartschaumstoff zwischen einem Innenrohr und einem Außenrohr eingebracht. Zur Vermeidung von Wärme- bzw. Kältebrücken werden das Innen- und das Außenrohr vor dem Ausschämen getrennt voneinander ausgerichtet, um durch vorherige Lagerung entstandene Durchbiegungen zu eliminieren. Die Ausrichtung der Rohre wird mit einem Abstandshalter erreicht. Der Polyurethan-Schaum selbst wird mittels zweier Mischköpfe mit einer nicht weiter dargestellten Vorrichtung zur Versorgung mit Polyurethan-Reaktionskomponenten eingebracht. Auf die Ausgestaltung des Mischkopfes wird nicht näher eingegangen. Die schematische Abbildung in den Figuren deutet jedoch auf eine zylindrische Formgebung des Mischkopfes hin.

Aus der US 4,522,578 ist eine Vorrichtung zur Einführung einer schäumbaren Kunststoffisolation in den Zwischenraum zwischen einem Innenrohr und einem Außenrohr bekannt. Dem gemäß wird ein miniaturisierter Mischkopf in den Zwischenraum zwischen einem Innen- und einem Außenrohr eingeführt. Der Austrag des Kunststoffmaterials erfolgt während des Zurückziehens des Mischkopfes. Der Mischkopf selbst besitzt eine längliche Form mit einer flachen, dem Innenrohr zugewandten Seite. Die dem Außenrohr zugewandt Seite weist zunächst einen relativ großen Krümmungsradius auf, der an den beiden Kantenbereichen in einen sehr kleinen Krümmungsradius übergeht. Links und rechts des Mischkopfes sind etwa halbkreisförmig eine Reihe von Unterstützungsführungen schwenkbar angeordnet. Diese Unterstützungsführungen helfen dem Mischkopf in seiner Abstützfunktion zwischen dem Innen- und dem Außenrohr. Überdies ist eine Betätigungseinrichtung separat zum Mischkopf angeordnet.

Aufgabe der Erfindung ist es, ein Mischkopfsystem anzugeben, welches sehr kompakt aufgebaut und zum Einsatz in Doppelrohren mit verschiedenen Durchmessern geeignet ist.

Diese Aufgabe wird durch die im Anspruch 1 genannten Merkmale gelöst.

Dem gemäß wird ein Mischkopfsystem für die diskontinuierliche Herstellung eines Mehrschichtrohres beschrieben, bei dem wesentliche Elemente im einem Gehäuse aufgenommen sind, welches zumindest teilweise und im wesentlichen kreisringsegmentförmig ausgebildet ist. Durch die kreisringsegmentförmige Ausbildung kann der auszuschäumende Zwischenraum zwischen einem Innen- und einem Außenrohr optimal genutzt werden. Dies ist insbesondere bei einem geringen Zwischenraum von besonderer Bedeutung.

Vorzugsweise ist die dem inneren Rohr zugewandte Seitenfläche des im wesentlichen kreisringsegmentförmig ausgebildeten Mischkopfes so ausgestaltet, dass sie im eingeführten Zustand mehr oder weniger parallel zur Außenseite dieses inneren Rohres verläuft. Sie kann also in etwa dem Krümmungsradius der Außenseite eines zu umschäumenden Innenrohres entsprechen. Analog wird die einem äußeren Rohr zugewandte Seitenfläche des im wesentlichen kreissegmentförmig ausgebildeten Mischkopfes so ausgestaltet, dass sie im eingeführten Zustand mehr oder weniger parallel zur Innenseite des äußeren Rohres verläuft. Sie kann also in etwa dem Krümmungsradius der Innenseite dieses äußeren Rohres entsprechen. Es ist jedoch nicht notwendig, dass die jeweiligen Flächen von Mischkopf und Innenrohr bzw. Außenrohr parallel verlaufen, insbesondere dann nicht, wenn der Mischkopf für die Befüllung von Mehrschichtrohren mit verschiedenen Durchmessern verwendet wird.

Je nach verbleibendem Zwischenraum zwischen Mischkopf und Innenrohr bzw. Außenrohr ist mit dem erfindungsgemäßen Mischkopf auch die Ausschäumung von Rohren mit anderen Durchmessern möglich.

Eine besonders bevorzugte Ausführungsform der vorliegenden Erfindung ist darin zu sehen, dass die Hydraulikeinrichtung segmentförmig aufgebaut ist, insbesondere durch die Verwendung von zumindest zwei im wesentlichen gleich ausgebildeten und hintereinander geschalteten Hydrauliksegmenten. Jedes Hydrauliksegment umfasst einen Hydraulikkolben, wobei der Hydraulikkolben des ersten Hydrauliksegments mit einem Steuerkolben des Mischkopfes und die Hydraulik zweier unmittelbar hintereinander geschalteten Hydrauliksegmente unmittelbar miteinander verbunden sind. Durch diese Ausgestaltung ist es möglich, auch bei der Verwendung von relativ kleinen Hydraulikkolben eine noch ausreichende Kraft zur Betätigung des Steuerkolbens aufzubringen. Die Hydraulikeinrichtung bzw. die Hydrauliksegmente sind die vorzugsweise ebenfalls kreisringsegmentförmig ausgebildet.

Die Austragsöffnung oder Austragsdüse am ausgangsseitigen Ende der Mischkammer ist vorzugsweise so ausgebildet und angeordnet, dass der Materialstrom fächerförmig aufgeweitet wird. Insbesondere kann der fächerförmige Strahl in Richtung des Außenrohrs oder des Innenrohrs gerichtet sein. Dadurch wird eine Verwirbelung und Aufmischung des vorher eingebrachten Materials verhindert. Es hat sich bezüglich des Aufschäumvorgangs als günstig erwiesen, in Richtung eines Rohres (Außen- oder Innenrohr) zu sprühen.

Zur Zufuhr bzw. Rückfuhr der verschiedenen Komponenten sind Zuführ- und Rückführleitungen vorgesehen, die vorzugsweise über einen Anschlussflansch mit dem Kopfteil verbunden sind. Auch diese Anschlussflansche können sich in den kreisringsegmentförmigen Aufbau einfügen.

Gemäß einer vorteilhaften Ausführungsform der Erfindung kann der Mischkopf in einem Käfig aufgenommen sein, welcher in etwa kreisringförmig ausgebildet ist und zum Innenrohr wie zum Außenrohr hin Rollen aufweist, auf denen der Käfig gegenüber den Rohren abrollt. Mit einer solchen Konstruktion ist die Abstützung von Innen- und Außenrohr zueinander möglich, so dass eine Dejustierung der beiden Rohre gegeneinander möglichst vermieden werden kann.

Die vorliegende Erfindung wird nachfolgend mit Bezug auf die beiliegenden Ausführungsformen anhand eines Ausführungsbeispiels näher erläutert. Die Zeichnungen zeigen in:
- **Fig. 1a:**: eine schematische Seitenansicht eines erfindungsgemäßen Mischkopfsystems,
- **Fig. 1b:**: eine Draufsicht auf ein erfindungsgemäßes Mischkopfsystem wie in Fig. 1a,
- **Fig. 1c:**: eine Frontansicht eines erfindungsgemäßen Mischkopfsystems aus Fig. 1a,
- **Fig. 1d:**: eine schematische Perspektivansicht des erfindungsgemäßen Mischkopfsystems aus Fig. 1a,
- **Fig. 2a-2c:**: die Aufnahme eines erfindungsgemäßen Mischkopfsystems in einem Rohrzwischenraum unterschiedlicher Durchmesser,
- **Fig. 3a:**: eine schematische Frontansicht eines erfindungsgemäßen Mischkopfsystems aus Fig. 1a mit aufgeweitetem Sprühstrahl und
- **Fig. 3b:**: eine schematische Seitenansicht eines erfindungsgemäßen Mischkopfsystems aus Fig. 1a mit gegen das Außenrohr gerichtetem Sprühstrahl.

Die vorliegende Erfindung wird nachfolgend anhand eines bestimmten Ausführungsbeispiels gezeigt. Allerdings ist darauf hinzuweisen, dass die Erfindung auch abweichend von diesem Ausführungsbeispiel verwirklicht werden kann.

In den Figuren ist ein erfindungsgemäßes Mischkopfsystem 10 dargestellt, dessen Mischkörper 12 aus einem Kopfteil 14, mehreren, sich daran anschließenden und hintereinander geschalteten Hydrauliksegmenten 13, zwei Anschlussflanschen 16 und 22 und einer Austragsdüse 30 besteht. Alternativ kann auch einfach eine Austragsöffnung vorgesehen sein.

Im Kopfteil 14 ist eine an sich bekannte Mischkammer ausgebildet, welche vorliegend nicht näher dargestellt ist. In die Mischkammer werden vorliegend zwei Komponenten, nämlich Isocyanat und Polyol eingebracht und dort vermischt, wobei das miteinander reagierende Gemisch dann über die Austragsdüse 30 in den Rohrzwischenraum ausbringbar ist. Die beiden Komponenten werden über Rohrzuführungen und Rohrrückführungen zur Verfügung gestellt. Insbesondere wird die Komponente 1 über die Rohrzuführungen 18 in Richtung des Kopfteils 14 geleitet. Von dort besteht über den Anschlussflansch 16 eine Verbindung zur nicht dargestellten Mischkammer. Ist die Verbindung zur Mischkammer mittels dem Steuerkolben (ebenfalls nicht dargestellt) unterbrochen, so erfolgt eine Rückführung der Komponente 1 über die Rückführleitung 20. In diesem Fall spricht man herkömmlicher weise von Rezirkulationsmischkopf.

Anstatt der Verwendung von Isocyanat und Polyol können auch andere Materialien zur Herstellung des Füllmaterial - wie eine Harz und ein Härter - verwendet werden.

In gleicher Weise wird die Komponente 2 über die Zuführleitung 24 dem Anschlussflansch 22 zugeführt, über den eine Einleitung in die nicht dargestellte Mischkammer möglich ist. Versperrt der Steuerkolben den Strömungsweg in die Mischkammer, so erfolgt wiederum eine Rückführung nunmehr über die Rückführleitung 26. Diese Techniken sind an sich bekannt.

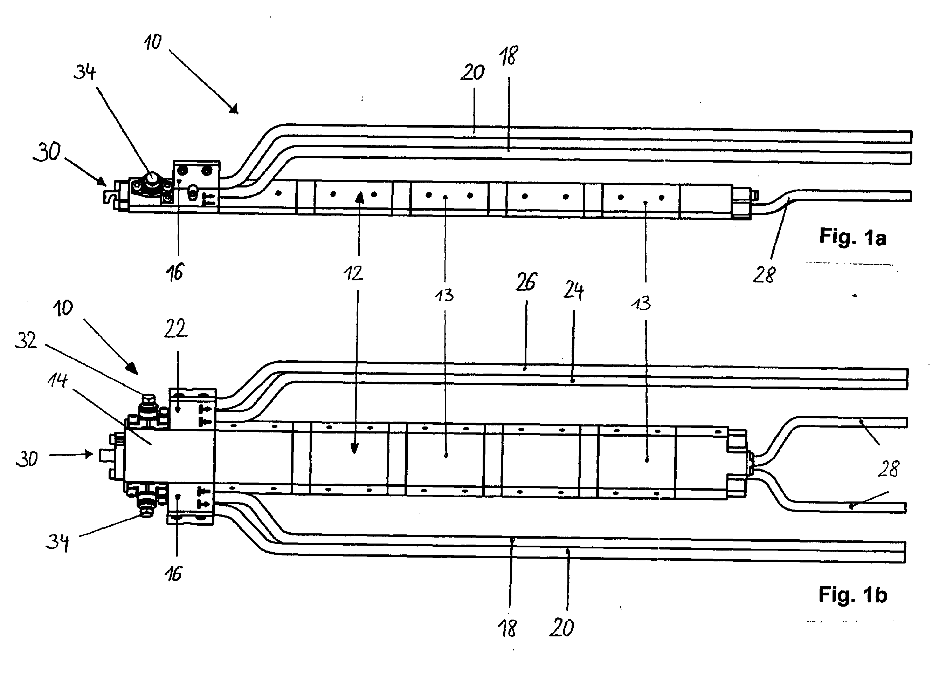

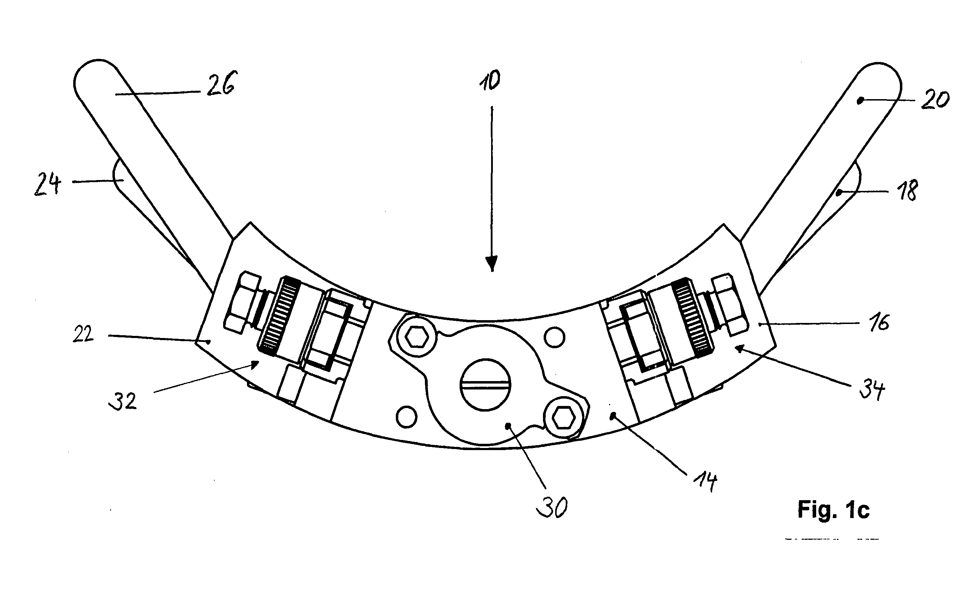

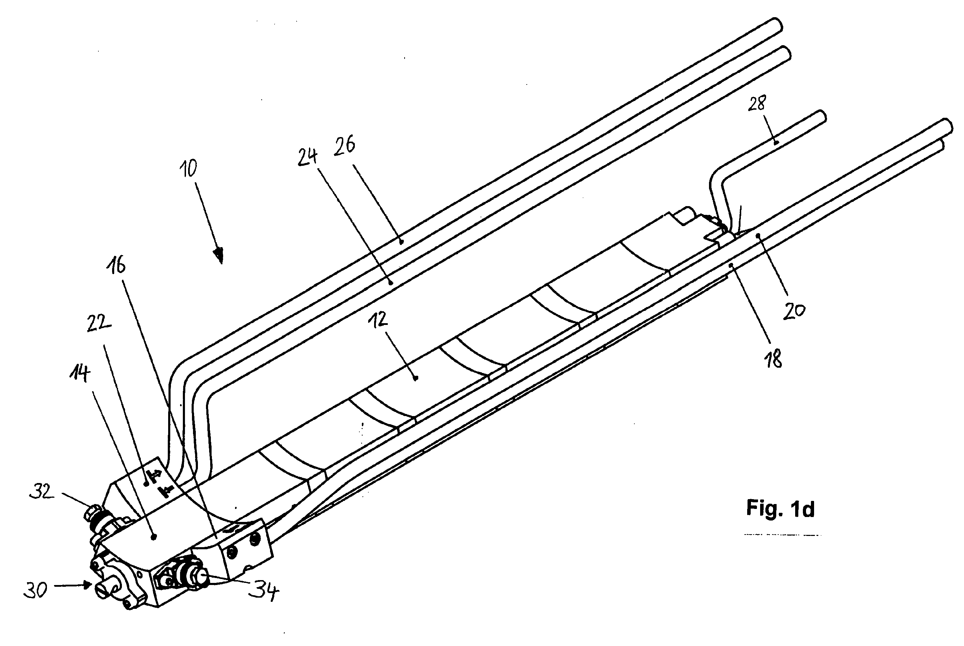

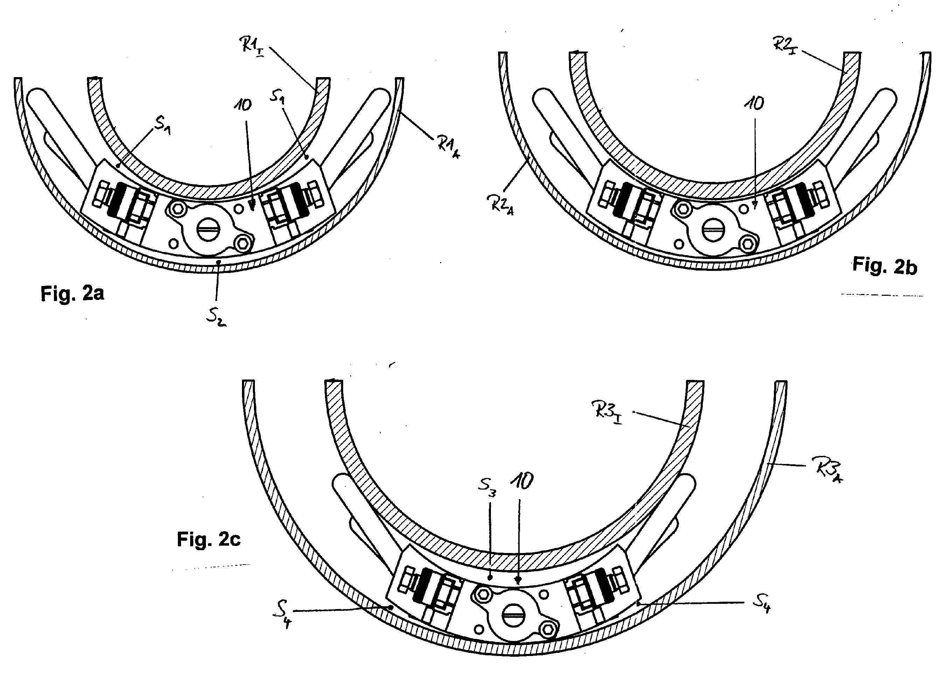

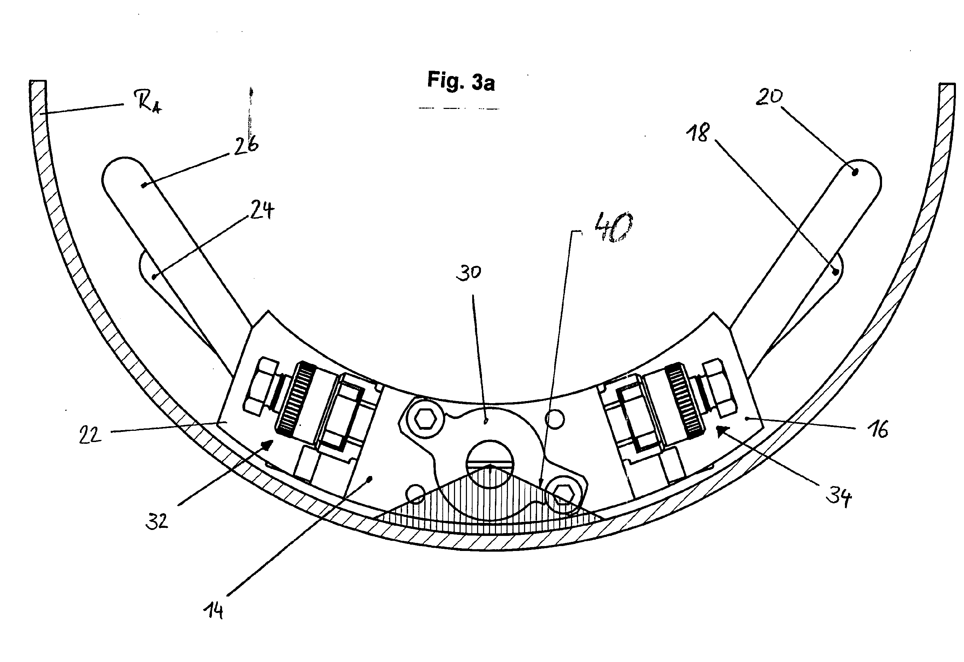

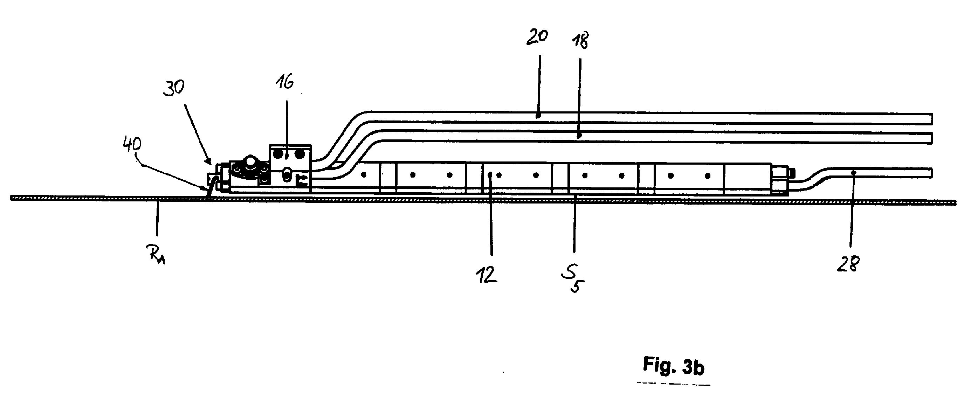

Der Steuerkolben wird über eine Hydraulikeinrichtung betätigt. Die Hydraulikeinrichtung besteht vorliegend aus fünf hintereinandergeschalteten Hydrauliksegmenten, von denen vorliegend in den Figuren 1a und 1b nur zwei mit der Bezugsziffer 13 bezeichnet sind. Die fünf Hydrauliksegmente 13 sind in gleicher Weise ausgebildet und beinhalten jeweils einen Hydraulikzylinder, einen Hydraulikkolben und Hydraulikbohrungen zur Hydraulikversorgung. Am Ende des letzten Hydrauliksegments 13 ist ein Hydraulikanschluss vorgesehen, der die Verbindung zu den Hydraulikzu- und -rückführleitungen 28 herstellt. Der Hydraulikkolben des ersten Hydrauliksegments ist unmittelbar mit dem Steuerkolben verbunden. Beide Kolben können auch integral ausgebildet sein. Die Hydraulikkolben von unmittelbar hintereinander angeordneten Hydrauliksegmenten sind unmittelbar miteinander verbunden. Durch die Hintereinander-Anordnung von vorliegend fünf Hydraulikkolben ist es möglich, eine ausreichende Kraft auf den Steuerkolben aufzubringen. Die Hydrauliksegmente sind, wie insbesondere in Fig. 1d ersichtlich, in gleicher Weise kreisringsegmentförmig ausgebildet, wie das Kopfteil 14 selbst. Damit kann der Raum zwischen einem Innenrohr (R1_{I}, R2_{I}, und R3_{I}) und einem Außenrohr (R1_{A}, R2_{A} und R3_{A}) optimal genutzt werden. Dies ist beispielsweise in den Figuren 2a-2c ersichtlich. In gleicher Weise bilden die Anschlussflansche 16 und 22 Fortsätze der kreissegmentförmigen Ausbildung, so dass auch sie optimal in dem Kreisringraum zwischen dem Innenrohr und dem Außenrohr platziert werden können. Am Kopfteil 14 selbst sind überdies zwei Einstellvorrichtungen in Form von Einstellschrauben 32 und 34 mit jeweils einer Nadeldüse für die jeweilige Komponente vorgesehen, so dass der Druck für eine zugeführte Komponente genau justiert werden kann. Die ausgangsseitige Austragsdüse 30 ist derart ausgebildet, dass beim Betrieb ein fächerförmiger Strahl in Richtung des Außenrohres erzeugt wird, vergleiche Figuren 3a und 3b.

An den in den Figuren dargestellten Rohren schließen sich nicht weiter gezeigte Schläuche an, so dass eine Bewegung des Mischkopfsystems in einem Rohr möglich ist. Ein solches Rohr kann beispielsweise 12 m oder 16 m lang sein, so dass dann auch die Bewegung des Mischkopfes im Bereich von 12 m liegen sollte.

Wie in den Figuren 2a-2c dargestellt ist, ist der erfindungsgemäße Mischkopf 10 in Doppelrohren mit unterschiedlichem Durchmesser zu verwenden. So ist der Mischkopf 10 in Fig. 2a in einem Doppelrohr mit einem kleineren Radius verwendet. Insbesondere ist zwischen dem Innenrohr R1_{I} und dem Mischkopf 10 ein randseitiger Spalt S₁ gebildet. Überdies ist zwischen dem Außenrohr R2_{A} und dem Mischkopf ein zentraler Spalt S₂ gebildet. Die Einbringung des Mischkopfes 10 in das Doppelrohr R1_{I} und R1_{A} ist dann möglich, wenn es ein gewisses Spiel bezüglich der Dicke des Mischkopfes 10 im Rohrspalt gibt.

In Fig. 2b ist zu erkennen, dass die Radien des Mischkopfes im wesentlichen konzentrisch zu den Radien des Innenrohrs R2_{I} bzw. des Außenrohres R2_{A} vorgesehen sind.

In Fig. 2c ist der Mischkopf in ein Rohr mit größeren Radien eingeführt. Aus diesem Grund ergibt sich zwischen dem Innenrohr R3_{I} und dem Mischkopf 10 ein zentraler Spalt S₃. Zwischen dem Mischkopf 10 und dem Außenrohr R3_{A} ergeben sich zwei seitliche Spalte S₄. Wie auch in den Ausführungsbeispiel gemäß Fig. 2a kann auch hier der Mischkopf 10 bei einer entsprechenden Toleranz zwischen den Rohren eingeführt werden.

Der Vorteil der vorliegenden Erfindung ist insbesondere dadurch zu sehen, dass ein kompaktes Mischkopfsystem inkl. Hydraulik ausgebildet werden kann, welches insgesamt in dem Zwischenraum zwischen einem Innenrohr und einem Außenrohr einführbar ist und zur Aufschäumung insbesondere eines Polyurethangemisches für die diskontinuierliche Herstellung eines Mehrschichtrohres geeignet ist.

### Bezugszeichenliste

- 10: Mischkopfsystem
- 12: Mischkopfkörper
- 13: Hydrauliksegment
- 14: Kopfteil mit Mischkammer
- 16: Anschlussflansch für Komponente 1
- 18: Zuführleitung für Komponente 1
- 20: Rückführleitung für Komponente 1
- 22: Anschlussflansch für Komponente 2
- 24: Zuführleitung für Komponente 2
- 26: Rückführleitung für Komponente 2
- 28: Hydrauliköl-Zu-/Rückführung
- 30: Austragsdüse
- 32: Druckeinstellschraube mit Nadeldüse für Komponente 2
- 34: Druckeinstellschraube mit Nadeldüse für Komponente 1
- 40: Aufgefächerter Strahl
- R1_{I}: Innenrohr 1
- R1_{A}: Außenrohr 1
- R2_{I}: Innenrohr 2
- R2_{A}: Außenrohr 2
- R3_{I}: Innenrohr 3
- R3_{A}: Außenrohr 3
- R_{A}: Außenrohr
- S₁- S₅: Spalt 1 bis Spalt 5

## Patentansprüche

1. Mischkopfsystem für die diskontinuierliche Herstellung eines Mehrschichtrohres mit einem zwischen einem Innenrohr und einem Außenrohr einführbaren Mischkopf (10), der
- ein Kopfteil (14) mit einer Mischkammer und einer ausgangsseitigen Austragsöffnung (30),
- und eine Hydraulikeinrichtung (13, 28) zur Betätigung eines Steuerkolbens aufweist, und wobei das Kopfteil (14) mit Zuführ- und Rückführleitungen (18, 20, 24, 26) für zumindest 2 Komponenten verbunden oder verbindbar ist,
**dadurch gekennzeichnet, dass**
die Hydraulikeinrichtung (34) einen Hydraulikkolben aufweist, wobei der Hydraulikkolben zur Betätigung mit einem Steuerkolben verbunden ist, und dass der Mischkopf (10) zumindest teilweise im wesentlichen kreisringsegmentförmig ausgebildet ist.

2. Mischkopfsystem nach Anspruch 1,
**dadurch gekennzeichnet,**
**dass** die Innenseite des im wesentlichen kreisringsegmentförmig ausgebildeten Mischkopfes (10) eine Ausgestaltung aufweist, so dass sie zum Außenradius eines zu umschäumenden Innenrohres (R1_{I}, R2_{I}, R3_{I}) im wesentlichen parallel verläuft.

3. Mischkopfsystem nach Anspruch 1 oder 2,
**dadurch gekennzeichnet,**
**dass** die Außenseite des im wesentlichen kreisringsegmentförmig ausgebildeten Mischkopfes eine Ausgestaltung aufweist, so dass sie zum Innenradius eines auszuschäumenden Außenrohres (R1_{A}, R2_{A}, R3_{A}) im wesentlichen parallel verläuft.

4. Mischkopfsystem nach einem der Ansprüche 1 bis 3,
**dadurch gekennzeichnet,**
**dass** die Hydraulikeinrichtung (13, 28) zumindest zwei gleich ausgebildete und hintereinander schaltbare Hydrauliksegmente (13) umfasst, von denen jedes einen Hydraulikkolben beinhaltet, wobei der Hydraulikkolben des ersten Hydrauliksegments mit dem Steuerkolben und die Hydraulikkolben zweier unmittelbar hintereinander geschalteter Hydrauliksegmente miteinander zusammenwirken.

5. Mischkopfsystem nach einem der Ansprüche 1 bis 4,
**dadurch gekennzeichnet,**
**dass** die Hydraulikeinrichtung ebenfalls im wesentlichen kreisringsegmentförmig ausgebildet sind.

6. Mischkopfsystem nach einem der Ansprüche 1 bis 5,
**dadurch gekennzeichnet,**
**dass** das Austragsdüse (30) so ausgebildet und angeordnet ist, dass das in den Rohrzwischenraum eingebrachte Material fächerartig versprüht wird.

7. Mischkopfsystem nach Anspruch 6,
**dadurch gekennzeichnet,**
**dass** die Austragsöffnung derart ausgebildet ist, dass der fächerförmige Strahl in Richtung des Außenrohres (R1_{A}, R2_{A}, R3_{A}) oder in Richtung des Innenrohres (R1_{I}, R2_{I}, R3_{I}) gerichtet ist.

8. Mischkopfsystem nach einem der vorhergehenden Ansprüche, **dadurch gekennzeichnet,**
**dass** eine Zufuhr- und eine Rückführleitung (18, 20) für eine erste Komponente und eine Zufuhr- und eine Rückführleitung für eine zweite Komponente (24, 26) vorgesehen ist und die Leitungen über Anschlussflansche (16, 22) mit dem Kopfteil (14) verbunden sind.

9. Mischkopfsystem nach einem der vorhergehenden Ansprüche,
**dadurch gekennzeichnet,**
**dass** der Mischkopf (10) in einem Käfig aufgenommen ist, welcher kreisringförmig ausgebildet ist und zum Innenrohr wie zum Außenrohr hin gewandte Rollen aufweist, auf denen er gegenüber den Rohren abrollt.

10. Mischkopfsystem nach einem der vorhergehenden Ansprüche,
**dadurch gekennzeichnet,**
**dass** der Mischkopf (10) als Rezirkulationsmischkopf ausgebildet ist.

## Claims

1. Mixing head system for discontinuous production of a multilayer tube with a mixing head (10) that can be inserted between an inner tube and outer tube, which
- has a head section (14) with a mixing chamber and a discharge opening (30) on the output side,
- and a hydraulic device (13, 28) for actuation of a control piston and whereby the head section (14) is, or can be, connected with supply and return lines (18, 20, 24, 26) for at least 2 components,
**characterized in that**
the hydraulic line (34) has a hydraulic piston, whereby the hydraulic piston is connected with a control piston for actuation, and that the mixing head, at least in part, is essentially ring segment-shaped.

2. Mixing head system in accordance with claim 1,
**characterized in that**
the inside of the fundamentally ring segment-shaped mixing head (10) is designed such that it essentially runs parallel to the outer radius of an inner tube (R11, R21, R31) to be poured and set.

3. Mixing head system in accordance with claim 1 or 2,
**characterized in that**
the outside of the fundamentally ring segment-shaped mixing head is designed such that it essentially runs parallel to the inner radius of an inner tube (R1A, R2A, R3A) to be poured and set.

4. Mixing head system in accordance with one of the claims 1 to 3,
**characterized in that**
the hydraulic device (13, 28) contains at least two hydraulic segments (13) of the same design and connectable in series, each of which contains a hydraulic piston, whereby the hydraulic piston of the first hydraulic segment interacts with the control piston and the hydraulic pistons of two hydraulic segments directly connected in series interact with one another.

5. Mixing head system in accordance with one of the claims 1 to 4,
**characterized in that**
the hydraulic device also has an essentially ring segment-shaped design.

6. Mixing head system in accordance with one of the claims 1 to 5,
**characterized in that**
the discharge nozzle (30) is designed and arranged such that the material introduced to the tube cavity is sprayed in a fan-type manner.

7. Mixing head system in accordance with claim 6,
**characterized in that**
the design of the discharge system is such that the fan-type jet is directed towards the outer tube (R1A, R2A, R3A) or towards the inner tube (R11, R21, R31).

8. Mixing head system in accordance with one of the previous claims,
**characterized in that**
a supply line and a return line (18, 20) are provided for a first component and a supply line and return line are provided for a second component (24, 26) and that the lines are connected via connecting flanges (16, 22) to the head section (14)

9. Mixing head system in accordance with one of the previous claims,
**characterized in that**
the mixing head (10) is accommodated in a cage with a ring-shaped design with rollers facing the inner tube and outer tube on which the cage rolls in relation to the tubes.

10. Mixing head system in accordance with one of the previous claims,
**characterized in that**
the mixing head (10) is designed as a recirculation mixing head.

## Revendications

1. Système de tête de mélange pour la fabrication discontinue d'un tube multicouche avec une tête de mélange (10) introduisable entre un tube interne et un tube externe. Cette tête de mélange (10) présente
- un élément de tête (14) avec une chambre de mélange et une ouverture de distribution (30) côté sortie,
- et un dispositif hydraulique (13, 28) pour l'actionnement d'un piston de commande, la tête (14) étant reliée ou reliable à des conduites d'alimentation et de retour (18, 20, 24, 26) pour au moins 2 composants
**se caractérisant par le fait que**
le dispositif hydraulique (34) présente un piston hydraulique, le piston hydraulique étant relié à un piston de commande pour l'actionnement, et que la tête de mélange (10) étant constituée, au moins en partie, sensiblement en forme de segments de cercle.

2. Système de tête de mélange selon la revendication 1,
**se caractérisant par le fait,**
**que** la face intérieure de la tête de mélange (10), constituée sensiblement en forme de segments de cercle, est conçue de façon à passer sensiblement parallèle au rayon extérieur d'un tube interne (R1_{I}, R2_{I}, R3_{I}) à gainer.

3. Système de tête de mélange selon la revendication 1 ou 2,
**se caractérisant par le fait,**
**que** la face extérieure de la tête de mélange, constituée essentiellement en forme de segments de cercle, est conçue de façon à passer sensiblement parallèle au rayon intérieur d'un tube externe (R1_{A}, R2_{A}, R3_{A}) à gainer.

4. Système de tête de mélange selon l'une des revendications 1 à 3,
**se caractérisant par le fait,**
**que** le dispositif hydraulique (13, 28) comprend au moins deux segments hydrauliques (13) de conception identique et commutables en série, dont chacun contient un piston hydraulique, le piston hydraulique du premier segment hydraulique interagissant avec le piston de commande et les pistons hydrauliques de deux segments hydrauliques directement commutés en série.

5. Système de tête de mélange selon l'une des revendications 1 à 4,
**se caractérisant par le fait, que le dispositif hydraulique est également conçu** sensiblement en forme de segments de cercle.

6. Système de tête de mélange selon l'une des revendications 1 à 5,
**se caractérisant par le fait, que** la buse de distribution (30) est conçue et disposée de telle façon que la matière introduite dans l'espace entre les tubes soit pulvérisée en éventail.

7. Système de tête de mélange selon la revendication 6,
**se caractérisant par le fait, que** l'ouverture de distribution est conçue de telle façon que le jet en éventail soit orienté en direction du tube externe (R1_{A}, R2_{A}, R3_{A}) ou en direction du tube interne (R1_{I}, R2_{I}, R3_{I}).

8. Système de tête de mélange selon l'une des revendications précédentes,
**se caractérisant par le fait, qu'**une conduite aller et une conduite de retour (18, 20) pour un premier composant et une conduite aller et une conduite de retour pour un deuxième composant (24, 26) sont prévues et que les conduites sont reliées à la tête (14) par des brides de raccordement (16, 22).

9. Système de tête de mélange selon l'une des revendications précédentes,
**se caractérisant par le fait, que** la tête de mélange (10) est logée dans une cage en forme de couronne et qui présente des rouleaux, orientés aussi bien vers le tube interne que vers le tube externe, qui servent à son déplacement face aux tubes.

10. Système de tête de mélange selon l'une des revendications précédentes,
**se caractérisant par le fait, que** la tête de mélange (10) est conçue comme tête de mélange de recirculation.
